# EUROPÄISCHE PATENTSCHRIFT

(11) **EP 1 585 378 B1**
(45) Veröffentlichungstag und Bekanntmachung des Hinweises auf die Patenterteilung: **02.11.2006**
(21) Anmeldenummer: 03785744.8
(22) Anmeldetag: 05.12.2003
(51) Int. Cl.: A01C 5/06, A01B 49/06

(54) **ANORDNUNG ZUM OEFFNEN UND SCHLIESSEN EINER SAATFURCHE**
ARRANGEMENT FOR OPENING AND CLOSING A SOWING FURROW
ENSEMBLE POUR OUVRIR ET RECOUVRIR UN SILLON POUR L'ENSEMENCEMENT

(30) Priorität: 10.01.2003 US 339981
(43) Veröffentlichungstag der Anmeldung: 19.10.2005
(73) Patentinhaber: DEERE & COMPANY, Moline Illinois 61265-8098 (US)
(72) Erfinder: RYLANDER, David, James, Victoria, IL 61485 (US); KEATON, Miles, Raymond, Rock Island, IL 61201 (US); THOMPSON, William, Hensen, Bettendorf, IA 52722 (US)
(74) Vertreter: Holst, Sönke
(86) Internationale Anmeldenummer: PCT/EP2003/013753
(87) Internationale Veröffentlichungsnummer: WO 2004/062343

(56) Entgegenhaltungen:
- FR-A- 2 689 724
- US-A- 4 275 671
- US-A- 4 307 674
- US-A- 5 970 891

## Beschreibung

Die Erfindung betrifft eine Anordnung zum Öffnen und Schließen einer Saatfurche im Erdreich.

Landwirtschaftliche Sämaschinen, wie z. B. eine Reihensämaschine oder eine Korndrillmaschine, bringen Saatgut in einer gewünschten Tiefe in mehrere in einem Ackerboden ausgebildete Saatfurchen aus. Im Falle einer Reihensämaschine werden mehrere Reihensäeinheiten normalerweise durch Bodenkontakt unter Verwendung von Rädern, Antriebswellen, Zahnrädern, Verteilergetrieben, Ketten oder dergleichen angetrieben. Jede Reihensäeinheit umfasst einen Rahmen, welcher beweglich mit einem Werkzeughalter verbunden ist. Der Rahmen kann einen Hauptbehälter für Saatgut, einen Behälter für Herbizide, einen Behälter für Insektizide und ein Furchenöffner/-schließer etc. tragen.

Bei einer Art von Furchenöffner/-schließer wird ein Tiefeneinstellrad eingesetzt, welches neben der führenden Seite eines Ein-Scheibenschar-Furchenöffners, der eine Saatgutablageeinrichtung an der nachlaufenden Seite der Scheibenschar aufweist, positioniert ist. Das Tiefeneinstellrad ermöglicht eine Tiefeneinstellung, säubert die Führungsfläche der Scheibenschar und begrenzt Erdreichaushebungen und Erdreichauswurf neben der Scheibenschar. Ein oder mehrere Schließräder folgen der Scheibenschar, um das Erdreich zu befördern und die Furche über dem von der Saatgutablageeinrichtung abgelegten Material zu schließen. Derartige Furchenöffner halten Unförmigkeiten auf dem Erdreich gering. Oftmals wird jedoch durch einen Teil der Saatgutablageeinrichtung oder durch eine Laufrolle Erdreich gerade außerhalb der Saatfurche befördert, wodurch Unförmigkeiten auf dem Erdreich, Leistungsanforderungen, Verschleiß und ungleichmäßige Saatgutabgabe zunehmen. Die Achse des Tiefeneinstellrads auf der führenden Seite ist nahe der Nabe der Scheibenschar angeordnet, derart, dass das Tiefeneinstellrad vor dem Bereich betrieben wird, in dem die Scheibenschar aus dem Erdreich austritt, so dass Erdreich, welches an dem Austrittspunkt ausgehoben wird, ein Problem darstellen kann, insbesondere wenn die Arbeitstiefe der Scheibenschar hoch ist. Wenn die Saatgutablageeinrichtung außerhalb der Saatfurche liegt, können auch Probleme bezüglich einer Spurfolge zunehmen.

Bei einem derartigen Ein-Scheibenschar-Furchenöffner dieser Art folgen die Schließräder der Saatgutablageeinrichtung in einem großen Abstand. Das eigentliche Schließen der Furche geschieht einige Zeit nachdem das abgelegte Material den Boden der Furche erreicht, so dass das Material Zeit hat vom Boden aufzuspringen, was zur Folge hat, dass das Material seichter abgelegt wird als gewünscht. Manchmal kann das abgelegte Material auch aus der Furche herausspringen und auf der Oberseite des Ackerbodens zum Liegen kommen. Saatgut, welches oberhalb des Bodens liegt, wird nicht auskeimen. Ein derartiger Furchenöffner weist des Weiteren größere geometrische Raumanforderungen auf, da das Tiefeneinstellrad, die Scheibenschar und die Schließräder relativ zur Fahrtrichtung in Reihe aufgebaut sind.

Die US 6,347,594 A offenbart einen Furchenöffner zum Formen einer Saatfurche in einen Ackerboden, welcher eine Ein-Scheibenschar aufweist. Ein Tiefeneinstellrad ist entlang der führenden Seite der Scheibenschar angeordnet und ein weiteres Rad ist so positioniert, dass es im Wesentlichen die Saatfurche überdeckt. Die Räder sind relativ zur Saatfurche auf schräg angeordneten Achsen gelagert. Die Räder sind nicht derart ausgelegt, die Furche von beiden Seiten zuzudrücken, sondern eher derart, dass sie im Wesentlichen zueinander ausgerichtet sind. Das heißt, die Räder sind nicht ganz parallel zueinander ausgerichtet, sie sind jedoch im Wesentlichen zueinander ausgerichtet.

Die Ausgestaltung des in der US 6,347,594 A offenbarten Furchenöffners ist eine Verbesserung gegenüber dem Stand der Technik. Er ist dennoch nur speziell auf eine Ein-Scheibenschar ausgerichtet.

Die FR 2 689 724 A offenbart eine Sämaschine mit einem Furchenöffner, der eine Zwei-Scheibenschar aufweist. Ferner ist ein Furchenschließer enthalten, der aus zwei Scheiben besteht, die entgegengesetzt zu den Scheiben des Furchenöffners ausgerichtet sind.

Die US 4 307 674 A offenbart ebenfalls eine Sämaschine mit einem Furchenöffner, der eine Zwei-Scheibenschar aufweist. Ferner ist ein Furchenschließer enthalten, der in Bearbeitungsrichtung hinter dem Furchenöffner angeordnet ist.

Die US 5 970 891 offenbart eine Sämaschine, die einen als Zwei-Scheibenschar ausgebildeten Furchenöffner aufweist. Der Furchenöffner weist Tiefeneinstellräder auf, die in Höhe des Furchenöffners angeordnet sind. Ferner ist hinter dem Furchenöffner ein Furchenschließer angeordnet. Tiefeneinstellräder und Furchenschließer weisen Räder auf, die auf dem Umfang der Räder verteilte und radachsenparallel angeordnete Finger aufweisen, die als Lauffläche dienen und durch die eine geringere Bodenverdichtung erzielt werden soll. Diese Anordnung stellt ein großes Bauvolumen dar und ist für höhere Bearbeitungsgeschwindigkeiten ungeeignet.

Die der Erfindung zu Grunde liegende Aufgabe wird darin gesehen, eine Anordnung zu schaffen, welche eine von einer Zwei-Scheibenschar ausgebildete Saatfurche bei höheren Arbeitsgeschwindigkeiten effektiv schließt, eine geringe Erdreichverdichtung aufweist und ein kleines Bauvolumen benötigt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Anordnung geschaffen, mit der eine Saatfurche im Erdreich geöffnet und geschlossen werden kann. Die Anordnung umfasst einen Furchenöffner/-schließer, wobei der Furchenschließer ein Paar von Tiefeneinstell-/Schließrädern aufweist, welche hinter einem entsprechenden Paar von Scheiben eines Furchenöffners in Reihe angeordnet sind.

In einer besonders bevorzugten Ausgestaltung der Erfindung sind die Scheiben des Furchenöffners relativ zueinander in einem Winkel angeordnet. Die Scheiben weisen jeweils eine innere Seite und eine äußere Seite auf, wobei die inneren Seiten einander zugewandt und die äußeren Seiten einander abgewandt angeordnet sind. Jede Scheibe weist des Weiteren eine führende und eine nachlaufende Kante relativ zur Fahrtrichtung auf. Die Tiefeneinstell-/Schließräder des Furchenschließers weisen jeweils eine innere Seite auf, wobei die inneren Seiten einander zugewandt angeordnet und an die entsprechenden äußeren Seiten der Scheiben angrenzend positioniert sind. Dabei ist jedes Rad im Wesentlichen fluchtend und unmittelbar neben der äußeren Seite einer entsprechenden Scheibe angeordnet. Jedes Tiefeneinstell-/Schließrad weist des Weiteren eine führende Kante und eine nachlaufende Kante auf, wobei die führende Kante zwischen der führenden Kante und der nachlaufenden Kante der entsprechenden Scheibe und die nachlaufende Kante in Fahrtrichtung hinter der nachlaufenden Kante der entsprechenden Scheibe positioniert ist.

Ein Vorteil der Erfindung besteht darin, dass die Anordnung mit hohen Fahrgeschwindigkeiten betrieben werden kann und dabei ein hohe Abstandsgenauigkeit für das Saatgut liefert.

Ein weiterer Vorteil besteht darin, dass die Tiefeneinstell-/Schließräder eine geringe Bodenverdichtung verursachen.

Des Weiteren besteht ein Vorteil darin, dass die Scheiben und die Tiefeneinstell-/Schließräder derart ausgebildet sind, dass sie in einer Weise zusammenwirken, die ein effektives Furchenöffnen und -schließen ermöglicht und dabei ein Minimum an Bauvolumen darstellt.

Ferner ist es von Vorteil, dass mit den Tiefeneinstell-/Schließrädern auf nassen, feuchten und matschigen Böden eine verbesserte Furchenschließung erzielt wird.

Ein weiterer Vorteil besteht darin, dass die Tiefeneinstell-/Schließräder eine doppelte Funktionalität aufweisen und sowohl eine Tiefeneinstellung als auch eine Schließung durchführen.

Es zeigt:
- Fig. 1: eine Seitenansicht einer erfindungsgemäßen Sämaschine mit einer Reihensäeinheit,
- Fig. 2: eine teilweise aufgebrochene Seitenansicht der Reihensäeinheit aus Figur 1 und
- Fig. 3: eine Draufsicht eines in Figur 1 und Figur 2 dargestellten Furchenöffners/-schließers.

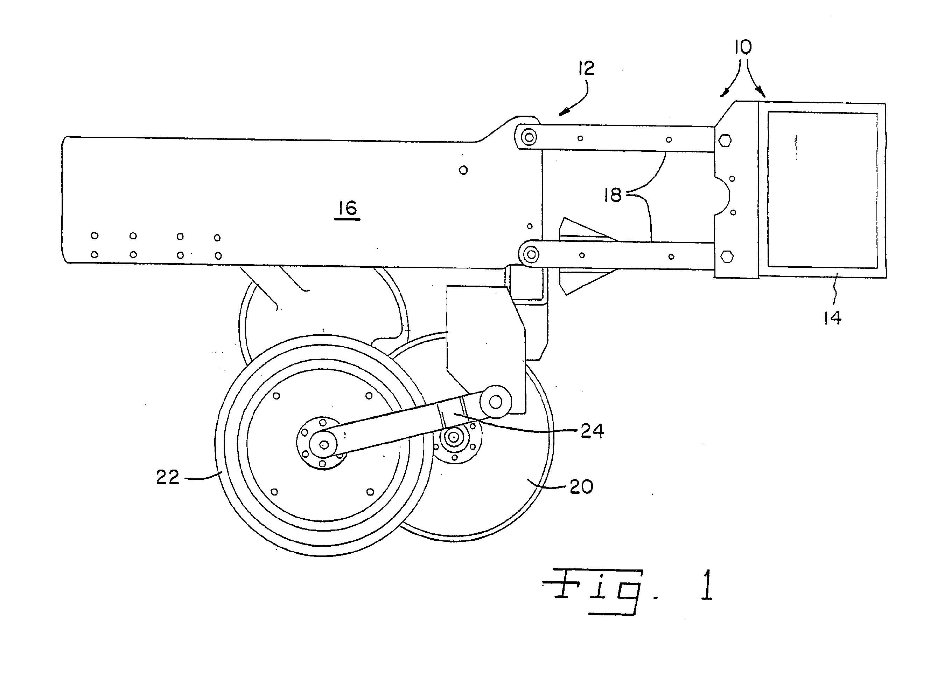

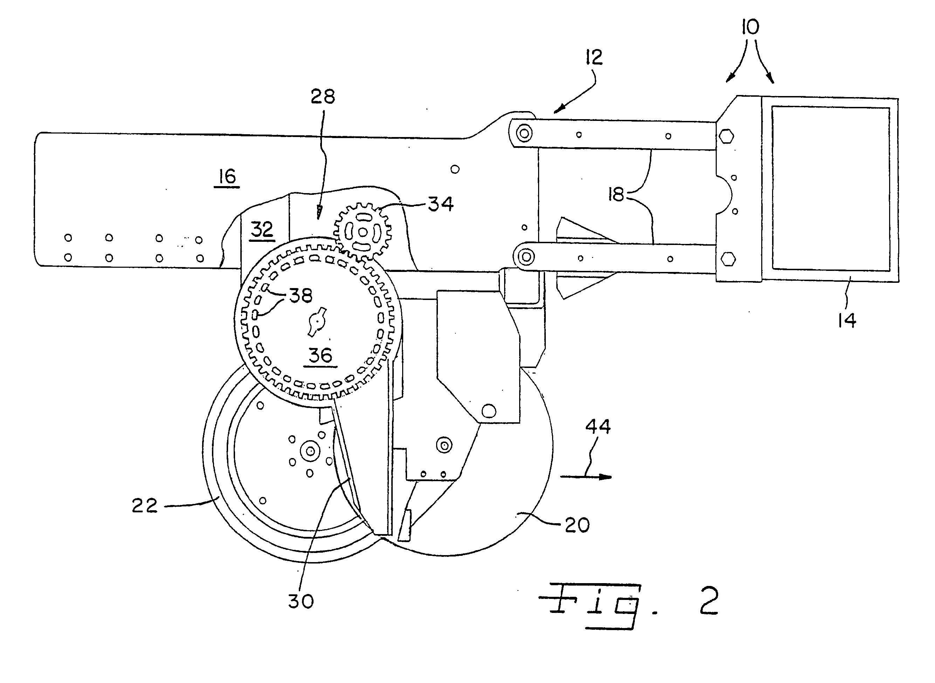

In den Figuren 1 und 2 ist eine erfindungsgemäße Sämaschine 10 dargestellt. Die Sämaschine 10 ist als Reihensämaschine ausgebildet, sie könnte aber auch als Korndrillmaschine etc. ausgebildet sein. Die Figuren 1 und 2 zeigen eine einzelne Reihensäeinheit 12 einer Reihensämaschine mit mehreren Reihensäeinheiten, wobei jede Reihensäeinheit 12 im Wesentlichen identisch ausgebildet und mit einem herkömmlichen Werkzeugträger 14 verbunden ist. Der Einfachheit halber ist nur eine einzelne Reihensäeinheit 12 dargestellt.

Die Reihensäeinheit 12 weist einen Rahmen 16 auf, welcher durch ein Parallelgestänge 18 an den Werkzeugträger 14 befestigt ist. Der Werkzeugträger 14 ist mit einer Antriebseinheit (nicht gezeigt) verbunden, beispielsweise einem landwirtschaftlichen Traktor. Beispielsweise kann der Werkzeugträger 14 über eine Dreipunkt-Anhängevorrichtung an den landwirtschaftlichen Traktor gekoppelt sein. Der Werkzeugträger 14 kann mit Transporträdern, Markierungsarmen etc. von konventioneller Gestalt, welche der Einfachheit halber nicht dargestellt sind, gekoppelt sein. Die Transporträder sorgen auf bekannte Art und Weise für einen bodenseitigen Antrieb der Reihensämaschine 12 unter Verwendung von Wellen, Ketten, Zahnrädern, Verteilergetrieben etc.

Der Rahmen 16 trägt einen zweischeibigen Furchenöffner 20, zur Ausbildung einer Saatfurche in einem Ackerboden. Dem Scheibenpaar des zweischeibigen Furchenöffners 20 ist ein entsprechendes Tiefeneinstell-/Schließradpaar 22 zugeordnet. Insbesondere ist jedes Tiefeneinstell-/Schließrad 22 im Wesentlichen fluchtend und unmittelbar neben der Außenseite einer entsprechenden Scheibe des zweischeibigen Furchenöffners 20 angeordnet. Die Tiefeneinstell-/Schließräder 22 sind durch entsprechende Arme 24 schwenkbar mit dem Rahmen 16 verbunden. Jedes Tiefeneinstell-/Schließrad 22 kann vertikal einstellbar angeordnet sein, um die Tiefe einer mit dem zweischeibigen Furchenöffner 20 in den Ackerboden geschnittene Furche einzustellen.

Wie in Figur 2 dargestellt ist, trägt jede Reihensäeinheit 12 der Sämaschine 10 ein Dosiersystem 28 und ein Saatgutrohr 30 für Saatgut. Das Dosiersystem 28 weist eine Einlassrinne 32 auf, welche Saatgut aus einer Saatguthauptversorgung, wie z. B. aus einem über dem Rahmen 16 getragenen Saatgutbehälter, aufnimmt. Alternativ kann das Saatgut auch in einem entfernt gelegenen Saatguthauptbehälter enthalten sein und über Druckluft oder dergleichen der Einlassrinne 32 zugeführt werden.

Das Dosiersystem 28 weist des Weiteren ein Antriebsrad 34 auf, welches eine Saatgutscheibe 36 antreibt, die mit mehreren und über den Umfang intermittierend beabstandeten Saatgutzellen 38 versehen ist. Eine Vakuumquelle (nicht gezeigt) erzeugt in den in der Saatgutscheibe 36 ausgebildeten Saatgutzellen 38 einen Unterdruck. Dieser Unterdruck erzeugt ein Eindringen von Saatgut in die Saatgutzellen 38 und hält das Saatgut in den Saatgutzellen 38 an seinem Platz. Das Saatgut wird in Abhängigkeit von einer für ein Feld gewünschten Menge und von einem für das Feld gewünschten Abstand von den Saatgutzellen 38 zu dem Saatgutrohr 30 gebracht.

Das Saatgutrohr 30 führt das Saatgut in vorbestimmter Menge und Abstand in die durch den zweischeibigen Furchenöffner 20 ausgebildete Saatfurche. Das Saatgutrohr 30 weist in Querrichtung zur Saatfurche eine Breite auf, die geringer als die Breite der Saatfurche ist, jedoch auch in etwa gleich zur Breite der Saatfurche sein kann. Das Saatgutrohr 30 ist derart ausgebildet, dass das Saatgut vorzugsweise in die Saatfurche fällt, ohne das Saatgutrohr 30 zu berühren, und dient auch als Windschutz für das Saatgut.

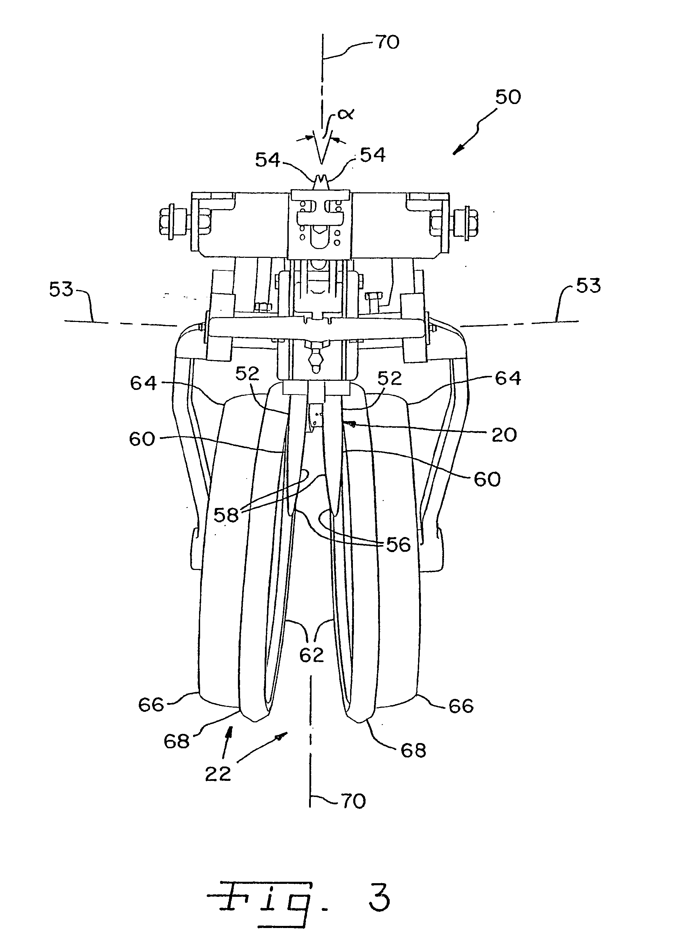

Wie in den Figuren 2 und 3 dargestellt ist, trägt der Rahmen 16 einen Furchenöffner/-schließer 50, welcher einen zweischeibigen Furchenöffner 20 und Tiefeneinstell-/Schließräder 22 umfasst. Der zweischeibige Furchenöffner 20 weist ein Paar Scheiben 52 auf, die relativ zueinander in einem vorbestimmten spitzen Winkel α (Figur 3) positioniert sind. Jede der Scheiben 52 ist um eine entsprechende Rotationsachse 53 rotierbar und weist relativ zur Fahrtrichtung 44 eine führende Kante 54 und eine nachlaufende Kante 56 auf.

Die Scheiben 52 weisen jeweils auch eine innere Seite 58, welche einander zugewandt angeordnet und jeweils eine äußere Seite 60, welche einander abgewandt angeordnet sind, auf. Das Saatgutrohr 30 definiert eine Materialausbringeinrichtung (beispielsweise für Saatgut, Dünger etc.), welche zwischen den inneren Seiten 58 der Scheiben 52 positioniert ist.

Das Tiefeneinstell-/Schließräderpaar 22 bietet zwei Funktionen, eine Tiefeneinstellung der Saatfurche und eine Saatfurchenschließung. Jedes Tiefeneinstell-/Schließrad 22 weist eine innere Seite 62 auf, welche einander zugewandt angeordnet und benachbart zu der äußeren Seite 60 der entsprechenden Scheibe 52 positioniert sind (siehe Figur 3). Jedes Tiefeneinstell-/Schließrad 22 weist relativ zur Fahrtrichtung 44 eine führende Kante 64 und eine nachlaufende Kante 66 auf. Die führende Kante 64 ist zwischen der Rotationsachse 53 und der nachlaufenden Kante 56 der entsprechenden Scheibe 52 positioniert. Die nachlaufende Kante 66 ist relativ zur Fahrtrichtung 44 rückwärtig zur nachlaufenden Kante 56 der entsprechenden Scheibe 52 positioniert.

Jedes Tiefeneinstell-/Schließrad 22 enthält des Weiteren einen umrandenden Radkranz 68, der an der inneren Seite 62 angrenzend angeordnet ist und somit wiederum an die durch die Scheiben 52 ausgebildete Saatfurche angrenzt. Der umrandende Kranz sorgt für eine örtliche Druckerhöhung auf das an der Saatfurche angrenzende Erdreich, um die Saatfurche zusammenzuschieben und abzudecken. Die Höhe des auf das Erdreich neben der Saatfurche ausgeübten Anpressdrucks kann in Abhängigkeit von der Anwendung angepasst werden. Beispielsweise könnte es bei bestimmten Anwendungen (z.B. wenn keine normalen Feldbestellungszustände vorliegen) erforderlich sein, mit den Tiefeneinstell-/Schließrädern 22 eine Anpresskraft von bis zu 1,33 kN (ca. 300 pounds (lbf)) auf den Boden auszuüben, um eine entsprechende Abdeckung der Saatfurche zu erwirken.

Wie in Figur 3 gezeigt, weisen die Scheiben 52 und die Tiefeneinstell-/Schließräder 22 eine zwischen ihnen liegende Symmetrieachse 70 auf. Mit anderen Worten sind die Scheiben 52 und die Tiefeneinstell-/Schließräder 22 auf jeder Seite der Saatfurche im Wesentlichen identisch ausgebildet. Selbstverständlich ist es möglich, die Scheiben 52 und/oder die Tiefeneinstell-/Schließräder 22 mit relativ zueinander verschiedenen Durchmessern und Ausrichtungen auszubilden. Beispielsweise können die Tiefeneinstell-/Schließräder 22 einen im Wesentlichen größeren Durchmesser besitzen als die Scheiben 52, wobei die führende Kante 64 eines jeden Tiefeneinstell-/Schließrads 22 vor der führenden Kante 54 der entsprechenden Scheibe 52 liegt und die nachlaufende Kante 66 des Tiefeneinstell-/Schließrads 22 hinter der nachlaufenden Kante 56 der entsprechenden Scheibe 52 liegt.

In dem gezeigten Ausführungsbeispiel wird der Furchenöffner/-schließer 50 in Verbindung mit einer landwirtschaftlichen Sämaschine 10 in Form einer Reihensäeinheit 12 eingesetzt. Selbstverständlich kann ein derartiger Furchenöffner/-schließer 50 auch für andere landwirtschaftliche Anwendungen eingesetzt werden, wie z.B. bei der Düngung etc..

Während des Betriebs wird ausgewähltes Saatgut aus einer Hauptversorgungsstelle für Saatgut von der Einlassrinne 32 des Dosiersystems 28 aufgenommen. Das Saatgut wird gegen eine Seite der Saatgutscheibe 36 gehalten, wobei die Saatgutscheibe 36 durch das Antriebsrad 34 mit einer vorgegebenen Drehzahl unter Verwendung von einem mechanischen Antrieb, hydraulischen Motor, Elektromotor oder einem anderen geeigneten Antrieb angetrieben wird. Das Saatgut wird von den Saatgutzellen 38 der Saatgutscheibe 36 aufgenommen. Um das Befördern des Saatguts in die Saatgutzellen 38 zu unterstützen wird die gegenüberliegende Seite der Saatgutscheibe 36 unter Verwendung von einer geeigneten Vakuumquelle mit einem Unterdruck beaufschlagt. Selbstverständlich kann auch ein Überdruck auf der Seite der Saatgutscheibe angewendet werden, auf der das Saatgut eingebracht wird. Das Saatgut wird von dem Dosiersystem 28 mit einer vorgegebenen Rate an das Saatgutrohr 30 abgegeben. Das Saatgut wird durch das Saatgutrohr 30 in die am Boden ausgebildete Saatfurche abgegeben. Die Saatfurche wird durch die Scheiben 52 des zweischeibigen Furchenöffners 20 ausgebildet. Die Tiefe und Breite der Saatfurche wird durch Anheben und Absenken der Tiefeneinstell-/Schließräder 22 gesteuert. Der umrandende Radkranz 68 eines jeden Tiefeneinstell-/Schließrades 22 schiebt das an die Saatfurche angrenzende Erdreich zusammen, wodurch die Saatfurche geschlossen wird.

Ein erfindungsgemäßer Furchenöffner/-schließer 50 kann mit höheren Fahrgeschwindigkeiten (z.B. 8-11 km/h oder 5-7 mph) bei verbesserter Abstandsgenauigkeit der Saatkörner betrieben werden. Wie aus Figur 2 hervorgeht, fällt das Saatgut an einer Stelle in die Furche, die direkt hinter der Furchenöffnung durch den zweischeibigen Furchenöffner 20 und direkt vor der Furchenschließung durch die Tiefeneinstell-/Schließräder 22 liegt. Durch den Furchenöffner/-schließer 50 wird nicht versucht die Vorwärtsgeschwindigkeit und den Bewegungsablauf des Saatguts auf die Vorwärtsgeschwindigkeit der Pflanzmaschine anzupassen, sondern eher, nachdem das Saatgut ausgebracht wurde die Saatfurche schnell zu schließen, um die Abstandsgenauigkeit zu verbessern. Dadurch, dass die Positionierung der Tiefeneinstell-/Schließräder 22 etwas hinter der sonst üblichen Positionierung erfolgt wird die Seitenwandverdichtung der Saatfurche verringert, da das Erdreich nicht gegen die Seitenflächen der Scheiben 52 gepresst wird. Im Gegensatz zu einer konventionellen Reihensäeinheit mit einem separat angeordneten Schließradpaar, welches hinter den Scheiben des Furchenöffners und der Tiefeneinstellräder angeordnet ist, sind die Tiefeneinstell-/Schließräder 22 der vorliegenden Erfindung derart positioniert und ausgebildet, dass die Saatfurche sofort hinter den Scheiben 52 geschlossen wird und dabei eine bessere Schließung der Saatfurche bei Fahren auf kurviger Bahn erzielt wird. Des Weiteren wird, da kein separates Schließradpaar hinter dem Furchenöffner/-schließer 50 angeordnet ist, die geometrische Kompaktheit der Reihensäeinheit verbessert. Dadurch, dass nasses oder feuchtes Erdreich nicht gegen die Seiten der Scheiben 52 geschoben wird und die Seitenwände der Saatfurche sofort nach dem Punkt der maximalen Öffnung der Saatfurche zusammengeschoben werden, stellt sich bei nassen, feuchten, matschigen oder ähnlich ungünstigen Bodenzuständen, ein verbessertes Schließen der Saatfurche ein.

## Patentansprüche

1. Anordnung zum Öffnen und Schließen einer Saatfurche im Erdreich,
- mit einem Furchenöffner (20), welcher ein Paar von Scheiben (52) aufweist, die in einem Winkel (α) relativ zueinander angeordnet sind, wobei jede Scheibe (52) eine innere Seite (58) aufweist und die inneren Seiten (58) einander zugewandt sind, wobei jede Scheibe (58) eine äußere Seite (60) aufweist und die äußeren Seiten (60) einander abgewandt sind und wobei jede Scheibe (52) eine relativ zur Fahrtrichtung (44) nachlaufende Kante (56) aufweist und
- mit einem Furchenschließer, welcher ein Paar von Rädern (22) aufweist, wobei jedes Rad (22) eine innere Seite (62) aufweist, die inneren Seiten (62) einander zugewandt und benachbart zu entsprechenden äußeren Seiten (60) der Scheiben (52) positioniert sind, **dadurch gekennzeichnet, dass** jedes Rad (22) im Wesentlichen fluchtend und unmittelbar neben der äußeren Seite (60) einer entsprechenden Scheibe (52) angeordnet ist und wobei jedes Rad (22) eine nachlaufende Kante (66) aufweist, welche in Fahrtrichtung (44) hinter der nachlaufenden Kante (56) der entsprechenden Scheibe (52) positioniert ist.

2. Anordnung nach Anspruch 1, **dadurch gekennzeichnet, dass** die Scheiben (52) eine zwischen ihnen liegende Symmetrieachse (70) aufweisen.

3. Anordnung nach Anspruch 2, **dadurch gekennzeichnet, dass** jede innere Seite (62) der Räder (22) und jede entsprechende innere Seite (58) der Scheiben (52) in einem üblichen spitzen Winkel relativ zur Symmetrieachse (70) positioniert sind.

4. Anordnung nach einem der vorhergehenden Ansprüche, **dadurch gekennzeichnet, dass** jede Scheibe (52) eine Rotationsachse und jedes Rad (22) eine relativ zur Fahrtrichtung führende Kante (64) aufweist, wobei die führende Kante (64) zwischen der entsprechenden Rotationsachse und der entsprechenden nachlaufenden Kante (56) der Scheiben (52) positioniert ist.

5. Anordnung nach einem der vorhergehenden Ansprüche, **dadurch gekennzeichnet, dass** die Scheiben (52) in einem spitzen Winkel (α) relativ zueinander angeordnet sind.

6. Anordnung nach einem der vorhergehenden Ansprüche, **dadurch gekennzeichnet, dass** jede Scheibe (52) eine relativ zur Fahrtrichtung (44) führende Kante (54) aufweist.

7. Anordnung nach Anspruch 6, **dadurch gekennzeichnet, dass** die führende Kante (64) eines jeden Rades (22) zwischen der führenden Kante (54) und der nachlaufenden Kante (56) der entsprechenden Scheibe (22) positioniert ist.

8. Anordnung nach einem der vorhergehenden Ansprüche, **dadurch gekennzeichnet, dass** jedes Rad (22) einen sich über den Umfang des Rades (22) erstreckenden Radkranz (68) aufweist, welcher an die innere Seite (62) des Rades (22) angrenzend positioniert ist.

9. Anordnung nach einem der vorhergehenden Ansprüche, **dadurch gekennzeichnet, dass** zwischen den Scheiben (52) eine Ausbringeinrichtung (30) für Material positioniert ist.

10. Landwirtschaftliche Maschine mit einem Werkzeugträger (14) und wenigstens einer von dem Werkzeugträger (14) getragenen Anordnung (50) nach einem der vorhergehenden Ansprüche.

## Claims

1. Assembly for opening and closing a furrow in the soil,
• with a furrow opener (20), which has a pair of discs (52) arranged at an angle (α) relative to one another, wherein each disc (52) has an inner side (58) and the inner sides (58) face one another, wherein each disc (58) has an outer side (60) and the outer sides (60) face away from one another, and wherein each disc (52) has a trailing edge (56) relative to the travel direction (44), and
• with a furrow closer, which has a pair of wheels (22), wherein each wheel (22) has an inner side (62), the inner sides (62) face one another and are positioned adjacent to corresponding outer sides (60) of the discs (52),
**characterised in that** each wheel (22) is arranged substantially in alignment and directly adjacent to the outer side (60) of a corresponding disc (52) and wherein each wheel (22) has a trailing edge (66), which is positioned behind the trailing edge (56) of the corresponding disc (52) in the travel direction (44).

2. Assembly according to Claim 1, **characterised in that** the discs (52) have an axis of symmetry (70) located between them.

3. Assembly according to Claim 2, **characterised in that** each inner side (62) of the wheels (22) and each corresponding inner side (58) of the discs (52) are positioned at a common acute angle relative to the axis of symmetry (70).

4. Assembly according to one of the preceding claims, **characterised in that** each disc (52) has a rotational axis and each wheel (22) has a leading edge (64) relative to the travel direction, wherein the leading edge (64) is positioned between the corresponding rotational axis and the corresponding trailing edge (56) of the discs (52).

5. Assembly according to one of the preceding claims, **characterised in that** the discs (52) are arranged at an acute angle (α) relative to one another.

6. Assembly according to one of the preceding claims, **characterised in that** each disc (52) has a leading edge (54) relative to the travel direction (44).

7. Assembly according to Claim 6, **characterised in that** the leading edge (64) of each wheel (22) is positioned between the leading edge (54) and the trailing edge (56) of the corresponding disc (22).

8. Assembly according to one of the preceding claims, **characterised in that** each wheel (22) has a wheel rim (68), which extends over the periphery of the wheel (22) and is positioned to adjoin the inner side (62) of the wheel (22).

9. Assembly according to one of the preceding claims, **characterised in that** a material placement device (30) is positioned between the discs (52).

10. Agricultural machine with a tool bar (14) and at least one assembly (50) according to one of preceding claims supported by the tool bar (14).

## Revendications

1. Système pour ouvrir et fermer un sillon de semis dans le sol,
- comportant un ouvreur de sillon (20), qui comprend une paire de disques (52), qui sont agencés en angle (α) l'un par rapport à l'autre, chaque disque (52) ayant une face intérieure (58) et les faces intérieures (58) étant orientées l'une vers l'autre, chaque disque (52) ayant une face extérieure (60) et les faces extérieures (60) étant opposées l'une à l'autre, et chaque disque (52) ayant un bord arrière (56) par rapport au sens de déplacement (44), et
- comportant un élément de fermeture de sillon, qui comprend une paire de roues (22), chaque roue (22) ayant une face intérieure (62), les faces intérieures (62) étant orientées l'une vers l'autre et positionnées à proximité des faces extérieures (60) correspondantes des disques (52),
**caractérisé en ce que** chaque roue (22) est située sensiblement en alignement et directement à côté de la face extérieure (60) d'un disque (52) correspondant, et chaque roue (22) ayant un bord arrière (66) qui, par référence au sens de déplacement (44), est positionné derrière le bord arrière (56) du disque correspondant (52).

2. Système selon la revendication 1, **caractérisé en ce que** les disques (52) comportent un axe de symétrie (70) situé entre ceux-ci.

3. Système selon la revendication 2, **caractérisé en ce que** chaque face intérieure (62) des roues (22) et chaque face intérieure (58) correspondante des disques (52) sont positionnées selon un angle aigu usuel par rapport à l'axe de symétrie (70).

4. Système selon l'une quelconque des revendications précédentes, **caractérisé en ce que** chaque disque (52) comporte un axe de rotation et chaque roue (22) comporte un bord avant (64) par rapport au sens de déplacement, le bord avant (64) étant positionné entre l'axe de rotation correspondant et le bord arrière (56) correspondant des disques (52).

5. Système selon l'une quelconque des revendications précédentes, **caractérisé en ce que** les disques (52) sont agencés en formant un angle aigu (α) l'un par rapport à l'autre.

6. Système selon l'une quelconque des revendications précédentes, **caractérisé en ce que** chaque disque (52) comporte un bord avant (54) par rapport au sens de déplacement (44).

7. Système selon la revendication 6, **caractérisé en ce que** le bord avant (64) de chacune des roues (22) est positionné entre le bord avant (54) et le bord arrière (56) du disque (22) correspondant.

8. Système selon l'une quelconque des revendications précédentes, **caractérisé en ce que** chaque roue (22) comporte une jante (68) qui s'étend sur tout le pourtour de la roue (22) et qui est adjacente à la face intérieure (62) de la roue (22).

9. Système selon l'une quelconque des revendications précédentes, **caractérisé en ce qu'**un dispositif de distribution (30) de matière est positionné entre les disques (52).

10. Machine agricole comporte un porte-outil (14) et au moins un système (50) selon l'une quelconque des revendications précédentes, porté par le porte-outil (14).
